# FASCICULE DE BREVET EUROPEEN

(11) **EP 0 996 569 B1**
(45) Date de publication et mention de la délivrance du brevet: **23.10.2002**
(21) Numéro de dépôt: 98939688.2
(22) Date de dépôt: 16.07.1998
(51) Int. Cl.: B64C 13/04, B64C 27/00

(54) **PROCEDE ET DISPOSITIF D'AIDE AU PILOTAGE DES HELICOPTERES PAR DES LIMITATIONS DE PUISSANCE DES TURBOMOTEURS ET/OU DU REGIME ROTOR**
HILFSTEUERVORRICHTUNG UND -VERFAHREN FÜR EINEN HUBSCHRAUBER MIT BEGRENZUNG DER TRIEBWERKSLEISTUNG UND/ODER ROTORDREHZAHL
METHOD AND DEVICE FOR ASSISTING THE PILOT IN CONTROLLING THE TURBOSHAFT POWER AND/OR ROTOR SPEED OF HEAT-PROPELLED HELICOPTERS

(30) Priorité: 18.07.1997 FR 9709391
(43) Date de publication de la demande: 03.05.2000
(73) Titulaire: Bonnans S.A., 13015 Marseille (FR); Stevens, Rene, 13700 Marignane (FR)
(72) Inventeur: STEVENS, René, F-13700 Marignane (FR)
(74) Mandataire: Marek, Pierre
(86) Numéro de dépôt international: FR9801554
(87) Numéro de publication internationale: WO99003728

(56) Documents cités:
- EP-A- 0 265 738
- FR-A- 2 476 013
- GB-A- 1 142 541
- GB-A- 2 192 163

## Description

La présente invention concerne un procédé et un dispositif agissant sur le pas collectif, aidant au contrôle de la puissance transmise au(x) rotor(s) des hélicoptères, par le ou les moteurs et la transmission, et/ou du régime rotor en autorotation. Elle vise également les hélicoptères thermopropulsés équipés de ce dispositif ou mettant en oeuvre ce procédé.

L'entraînement des rotors des hélicoptères thermopropulsés nécessite une puissance motrice qui doit être précisément contrôlée, car elle varie ou doit varier en fonction de divers paramètres (demande pilote, conditions de vol, température, pression atmosphérique, etc.).

Il existe donc des limitations à ne pas dépasser faute de quoi le(s) turbomoteur(s) et/ou la transmission pourraient subir des dommages dangereux pour l'intégrité de l'hélicoptère. Ces limitations peuvent être classées en deux catégories :
- limitations mécaniques : le couple maximal que peut transmettre sans dommage la transmission (par exemple la réduction disposée à la sortie de l'arbre de puissance du turbomoteur) ;
- limitations thermiques mesurées :
- soit, par le régime générateur maximal du générateur de gaz ;
- soit, par la température maximale des gaz de la ou des turbines.

Afin de ne pas dépasser ces limitations, le pilote d'hélicoptère doit contrôler la puissance transmise aux rotor(s) par le(s) turbomoteur(s), et par la transmission, à l'aide du pas collectif. Pour cela, il limite le déplacement du pas collectif vers le haut, de façon à ne pas dépasser les limitations mécaniques de la transmission et les limitations mécaniques ou thermiques du (des) turbomoteur(s) précédemment indiquées.

Sur les moteurs "Turbomeca " (Marque Déposée), la première limitation thermique atteinte est le régime générateur maximal du générateur de gaz et, sauf dégradation du moteur, la température maximale des gaz n'est atteinte qu'après. On dit que le moteur est piloté en Ng.

Sur la plupart des moteurs étrangers, c'est en général l'inverse et on dit alors que le moteur est piloté en "t4 " ou en "t45".

Pour pouvoir respecter toutes ces limitations, le pilote dispose, sur la planche de bord, de plusieurs indicateurs, qui peuvent être à aiguilles multiples. Dans toutes les phases de vol, il doit s'assurer qu'aucune de ces limites n'est dépassée. Dans les phases de décollage et d'atterrissage, où il faut surtout regarder à l'extérieur, et où l'hélicoptère est souvent utilisé aux limites de ses possibilités, c'est une tâche relativement difficile qui demande beaucoup d'attention.

Pour rendre cette tâche plus facile, on a utilisé sur certains appareils monomoteurs, des butées éclipsables, par exemple sur les appareils "Gazelle" et "Dauphin" (Marques déposées), préréglées par le pilote en fonction de la température extérieure.

Malheureusement, ce type de butée ne peut que protéger thermiquement le moteur et ceci pour un cas de vol donné ; on choisit pour cela le vol vertical. En effet, la puissance absorbée par le rotor pour un pas général donné dépend de plusieurs paramètres, essentiellement de la pression atmosphérique, de la température extérieure et de la vitesse d'avancement de l'hélicopère. En particulier, ce type de butée ne protège pas la transmission des effets nuisibles des surcouples, à basse altitude, quand il fait froid.

Un objectif visé par la présente invention, est de remédier à ces inconvénients.

Selon l'invention, ce but est atteint grâce à un procédé suivant lequel on détecte l'approche et/ou le dépassement de la première limitation atteinte, par un calculateur programmé de façon à commander une butée mécanique motorisée assurant la formation d'un point dur s'opposant à la poursuite du mouvement de pivotement dudit levier de pas collectif vers le haut.

Selon une autre disposition caractéristique, ce procédé permet le contrôle du régime rotor d'un hélicoptère, en autorotation, et il est remarquable, dans cette application, en ce que partant de la détection de l'approche et/ou du dépassement du régime rotor souhaité, au moyen d'un calculateur programmé pour cela, ledit calculateur étant également programmé pour activer une butée mécanique motorisée, prépositionnée à une valeur prédéterminée du pas collectif, de façon à assurer la formation d'un point dur ou butée constituant un obstacle à la libre poursuite du mouvement de pivotement dudit levier de pas collectif vers le bas.

Le dispositif d'aide au contrôle, par le pilote, des limitations de puissance du ou des turbomoteurs d'hélicoptères thermopropulsés, selon l'invention, est remarquable en ce qu'il comprend une butée mécanique motorisée assurant la formation d'un point dur ou butée s'opposant à la poursuite du mouvement de pivotement du levier de pas collectif vers le haut, cette butée mécanique motorisée étant activée par un calculateur programmé pour détecter l'écart entre les limitations et les paramètres de puissance correspondants, sélectionner le plus important, et pour commander ladite butée, dès que l'une des limitations de puissance est atteinte ou dépassée.

Le dispositif d'aide au contrôle, par le pilote, du régime rotor d'hélicoptères thermopropulsés, selon l'invention, est notamment remarquable en ce qu'il comprend une butée mécanique motorisée assurant la formation d'un point dur ou butée s'opposant à la poursuite du mouvement de pivotement du levier de pas collectif vers le bas, cette butée mécanique motorisée étant activée par un calculateur programmé pour détecter l'écart entre la limitation du régime rotor et le régime actuel, et pour commander ladite butée, dès que le régime rotor maximal de consigne donné au calculateur est atteint ou dépassé.

Selon un mode de réalisation préféré de l'invention, le procédé et le dispositif susmentionnés sont encore remarquables en ce que le point dur ou butée créée par la motorisation commandée par le calculateur est surpassable, par l'action d'un accouplement à friction, placé entre la ou les butées et la motorisation, de façon à permettre au pilote de surpasser cette butée en cas d'urgence.

Selon un mode de réalisation intéressant du dispositif de l'invention, le système de butée(s) mécanique(s) motorisée(s) comprend un moteur électrique entraînant un réducteur irréversible relié au levier de pas collectif au moyen d'une timonerie ou transmission, et en ce que les organes électro-mécaniques du système de butée(s) motorisée(s) sont placés sur un élément de la timonerie ou transmission, cet élément étant constituée en deux parties assemblées avec une possibilité de mouvement relatif l'une par rapport à l'autre, l'une de ces parties étant munie de la ou des butées, tandis que l'autre porte un butoir pouvant être mis en contact avec la butée, ou avec l'une ou l'autre des butées, laquelle ou lesquelles comporte(nt) un système de détection électrique de contact avec ledit butoir, la ou lesdites butée(s) étant, de préférence, ajustable(s).

De l'exposé qui précède, on comprend que le procédé et le dispositif de l'invention peuvent utiliser un système de butée mécanique motorisée unique, soit pour le contrôle des limitations de puissance du ou des turbomoteurs de l'hélicoptère, soit pour le contrôle du régime rotor de l'appareil.

Toutefois, une solution globale proposée par l'invention consiste, de manière plus particulièrement intéressante, à créer deux butées mécaniques, motorisées par le même mécanisme de motorisation, et à les asservir à la première limitation atteinte pour le cas de vol où se trouve l'hélicoptère, et c'est cette solution très avantageuse qui est décrite dans la suite du présent exposé.

De cette façon, il suffira au pilote de maintenir une légère pression vers le haut sur le levier de pas collectif pour obtenir la puissance maximale autorisée. Si le pilote relâche cette pression et qu'une limitation de puissance est atteinte, l'asservissement réduira le pas collectif pour qu'elle ne soit pas dépassée, mais n'augmentera pas pour autant la puissance lorsque celle-ci diminuera. On peut dire que le pilote est le servo-moteur de cet asservissement, ce qui lui permettra à tout instant et sans regarder ses instruments, donc à l'intérieur, de ne pas dépasser les limitations tout en restant dans la "boucle de pilotage".

Le même dispositif, à condition de fournir au calculateur le régime rotor, peut aider au contrôle du régime rotor en autorotation. En effet, la butée basse de pas collectif doit être réglée pour assurer un régime rotor suffisant en autorotation à sa masse minimale et ceci pour la basse altitude et pour la températute minimale à laquelle il est certifié. A l'opposé quand l'appareil est lourd qu'il vole haut et qu'il fait chaud, si le pilote maintient le pas sur la butée basse le régime rotor maximal autorisé est largement dépassé. Avec le procédé et le dispositif selon l'invention, il suffira au pilote de maintenir une légère pression sur le pas collectif vers le bas pour obtenir le régime maximal de consigne qui aura été donné au calculateur.

Bien entendu, dans tous les cas, un dispositif à ressort ou à friction devra permettre au pilote de pouvoir surpasser cette butée en cas d'urgence.

Les buts, caractéristiques et avantages ci-dessus, et d'autres encore, ressortiront mieux de la description qui suit et des dessins annexés dans lesquels:

La figure 1 est une vue schématique illustrant l'implantation de la butée mécanique motorisée dans la commande de pas collectif.

La figure 2 est une représentation schématique d'un premier exemple de réalisation du dispositif de butée mécanique motorisée selon l'invention.

La figure 3 est une représentation schématique d'une variante de réalisation de ce dispositif de butée mécanique motorisée.

La figure 4 est une vue de détail, à caractère schématique et à plus grande échelle, des composants électromécaniques de cette variante d'exécution du dispositif de butée mécanique motorisée.

La figure 5 représente le réseau des courbes illustrant la relation liant le pas collectif à la puissance réduite absorbée.

Les figures 6 et 6bis représentent ces mêmes courbes pour le vol stationnaire en pression standard (1013 hPa).

La figure 7 représente le schéma de principe de l'asservissement de la butée à la limitation de puissance, en vol avec entrainement moteur.

La figure 8 est un schéma de principe de l'asservissement de la butée à la limitation en autorotation.

On se réfère auxdits dessins pour décrire des exemples de réalisation intéressants, bien que nullement limitatifs, du dispositif de butée mécanique motorisée selon l'invention.

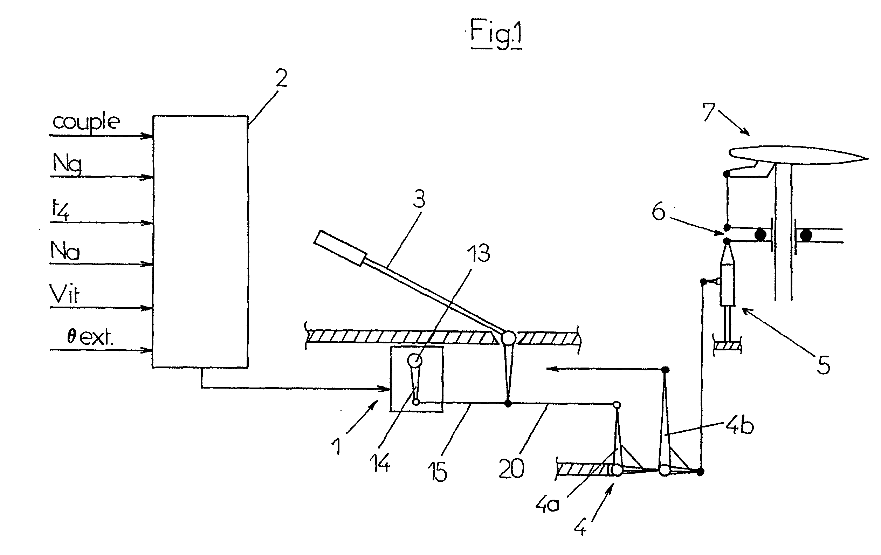

L'implantation de ce dispositif dans les commandes de vol, est représenté schématiquement à la figure 1. Le système de butées mécaniques motorisées désigné dans son ensemble, par la référence 1, est disposé de façon que son levier de sortie 14 soit relié, au moyen d'une bielle 15 à la timonerie de pas collectif, en amont du combinateur 4. Le levier de pas collectif 3 est lui-même relié, de manière classique, au moyen d'une bielle 20, au combinateur 4 comprenant les commandes de pas collectif 4a et de pas cyclique 4b et lui-même relié aux servocommandes 5 en contact avec le plateau cyclique 6 du rotor 7 de l'appareil (seules une commande cyclique et une servocommande sont schématiquement représentées pour ne pas surcharger inutilement le dessin). Le système de butées mécaniques motorisées est relié électriquement au calculateur 2.

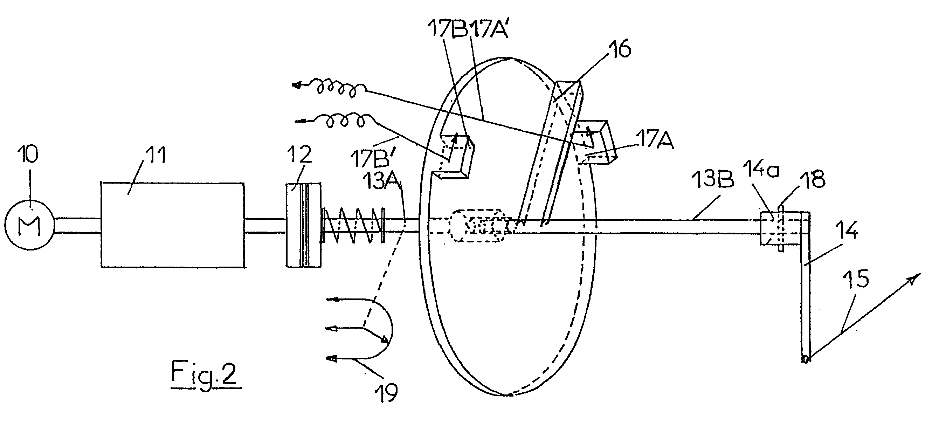

Un premier exemple de montage possible est représenté à la figure 2. Selon ce mode d'exécution, le système de butées mécaniques motorisées selon l'invention comprend un moteur électrique d'asservissement 10 commandé par le calculateur 2 de l'hélicoptère et un boîtier de réduction irréversible 11 dont la sortie est reliée à l'une des extrémités d'un arbre 13A, par l'intermédiaire d'un accouplement à friction 12. L'extrémité opposée de l'arbre 13A est assujettie aux deux butées haute et basse 17A, 17B. Chacune de ces butées 17A, 17B comporte un système de contact 17A', 17B', permettant, respectivement, de détecter la venue, au contact de l'une d'entre elles, d'un butoir 16 solidaire d'un arbre 13B. Cet arbre 13B est disposé dans le prolongement de l'arbre 13A auquel il est relié par un accouplement permettant un mouvement relatif de ces derniers. L'extrémité opposée de l'arbre 13B est solidaire de l'une des extrémités du levier pivotant 14 dont l'autre extrémité est reliée, au moyen d'une bielle rigide 15 et d'articulation, à la timonerie de pas collectif.

La liaison entre l'arbre 13B et le levier de pas collectif 3 est réalisée de sorte que tout mouvement de pivotement de ce dernier entraine une rotation d'amplitude correspondante dudit arbre.

La position des butées 17A, 17B sur lesquelles sont montés les contacts électriques est ajustable en fonction des caractéristiques du type d'hélicoptère sur lequel le dispositif de l'invention est installé.

Les contacts 17A', 17B' des butées 17A, 17B, sont reliés électriquement au calculateur 2.

Conventionnellement dans la suite du présent exposé, on considère que la butée 17A est la butée haute (limitation de puissance), tandis que la butée 17B est la butée basse (limitation de NR).

Le dispositif de contrôle selon l'invention comporte encore :
- un fusible 18 monté sur l'attache du levier de sortie 14 et destiné à prévenir tout blocage mécanique dudit dispositif (ce fusible peut être constitué par une goupille cisaillable, sous un certain moment, par exemple lorsqu'un effort supérieur d'une dizaine de kg est appliqué à l'extrémité du manche collectif),
- un dispositif de recopie 19 de la position des butées.

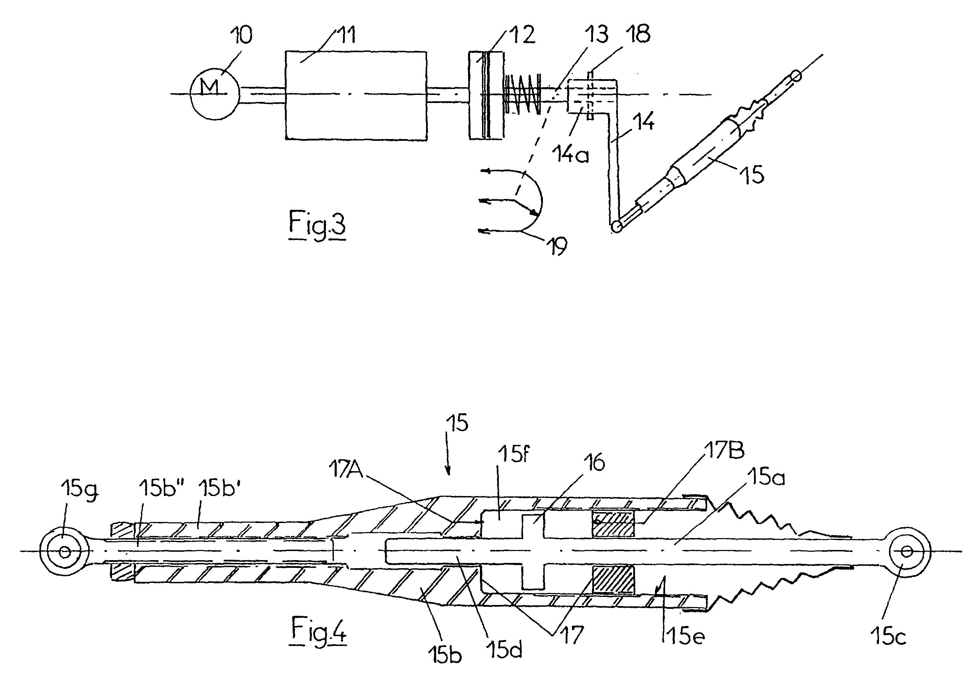

Les figures 3 et 4 illustrent une variante d'exécution du système de butées mécaniques motorisées selon l'invention.

Selon cette variante (figure 3), le système de butées mécaniques motorisées comprend également un moteur électrique d'asservissement 10 commandé par le calculateur 2 et un boîtier de réduction irréversible 11 dont la sortie est reliée à l'une des extrémités d'un arbre 13, par l'intermédiaire d'un accouplement à friction 12. L'extrémité opposée de l'arbre 13 est solidaire du levier 14 qui est relié, au moyen d'une bielle 15, à la timonerie du pas collectif. Cette variante diffère du mode d'exécution précédemment décrit, par le fait que les composants électromécaniques des butées sont incorporés à la bielle 15 reliant le levier pivotant 14 et le levier de pas collectif 3.

Dans ce cas, la bielle 15 qui incorpore les deux butées (haute et basse) est principalement constituée en deux parties 15a, 15b assemblées avec une aptitude de mouvement axial l'une par rapport à l'autre. La partie 15a est constituée par une tige, par exemple cylindrique comportant une extrémité externe munie d'un embout à oeil 15c relié au levier pivotant 14, et une portion interne opposée 15d logée avec une aptitude de coulissement dans la partie 15b. La portion interne 15d est munie d'un butoir 16 pouvant se déplacer entre deux butées 17A, 17B, dont les faces disposées en regard portent, respectivement, les contacts électriques 17A', 17B' (non représentés). La butée 17B peut être constituée par une bague filetée comportant un orifice axial pour le passage de la tige 15a et un filetage externe permettant son vissage dans un taraudage 15e que présente la paroi latérale interne d'un évidement cylindrique 15f de l'une des portions extrêmes de la partie 15b. La seconde butée 17A est constituée par le fond de l'évidement 15f dans lequel sont logées le butoir 16 et la bague 17B. On comprend que l'exécution de la butée 17B sous forme de bague filetée permet un réglage de la position de cette dernière.

La partie 15b de la bielle 15 qui est reliée au levier de pas collectif au moyen d'un embout à oeil 15g est elle-même exécutée en deux parties 15b', 15b" assemblées par vissage, de façon à permettre un ajustement de la position de la butée 17A.

Sur un hélicoptère, la détermination du pas limite donnant la puissance maximale autorisée est complexe ; elle dépend, en effet, de plusieurs paramètres :
- vitesse propre ;
- altitude ;
- température.

Déterminer directement ce pas limite, pour chaque hélicoptère, nécessiterait des capteurs extrêmement précis, donc coûteux, et un étalonnage particulier de chaque appareil ; tous les hélicoptères d'un même type n'étant pas strictement identiques, ce ne serait pas une solution économiquement réaliste.

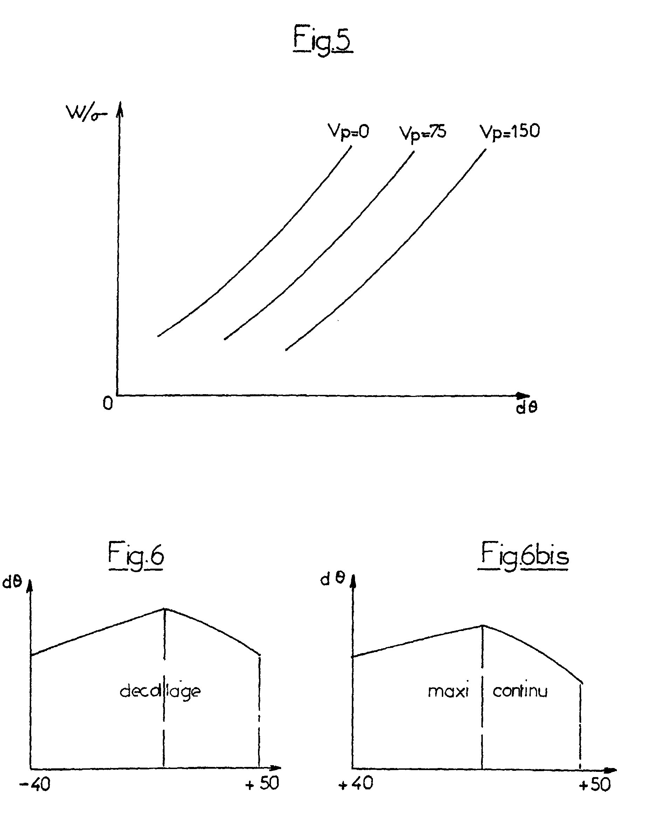

Une solution plus simple consiste à prépositionner approximativement la butée pour le cas de vol le plus critique (vol stationnaire au niveau de la mer en conditions standard pour les limitations de décollage, et montée dans les mêmes conditions, pour la limitation de puissance maximale continue), et laisser ensuite le soin à l'asservissement de positionner la butée à la bonne valeur, de façon suffisamment rapide, pour ne pas sortir des limites transitoires acceptables sur les niveaux de puissance. C'est cette solution qui est proposée ici ; elle ne nécessite qu'un capteur de vitesse, fonctionnant par tout ou rien vers 55 kt, généralement déjà disponible sur l'hélicoptère. Si cette solution ne s'avérait pas assez rapide, on pourrait alors prépositionner la butée en fonction de la température extérieure, conformément aux courbes des figures 6 et 6bis, et cela nécessiterait la présence d'un capteur de température extérieure.

Le principe de fonctionnement est le même en autorotation : la butée peut être aussi prépositionnée à une valeur fixe (à déterminer par essais en vol) ; dès que le régime rotor atteint le régime de consigne ou que le pas vient en contact avec la butée basse (contact 17B fermé), l'asservissement est activé et maintient le régime rotor de consigne tant que le pilote exerce une pression vers le bas sur le pas collectif.

### Butée haute (limitation de puissance) :

La butée 17A sera prépositionnée comme indiqué ci-dessus. L'asservissement ne sera rendu opérant que dans trois conditions :
- lorsqu'une limitation est atteinte ou dépassée ;
- lorsque la butée est atteinte (fermeture du contact 17A' de la butée 17A) ;
- lorsque sur une manoeuvre rapide du pas général, la limitation de puissance est proche. Pour cela il sera nécessaire de faire intervenir dans le calculateur des termes en dC/dt, DNg/dt et dt4/dt pour altérer vers le bas la valeur de butée préaffichée et apporter l'amortissement convenable.

Cela signifie, que le prépositionnement de la butée, ne sera modifié que lorsqu'une des trois conditions ci-dessus aura été remplie ; si elle est modifiée, cette dernière position sera gardée en mémoire, tant qu'à nouveau, le dispositif n'aura pas été activé par l'une au moins des trois conditions ci-dessus.

### Butée basse (limitation de NR)

La valeur fixe affichée dépend de l'hélicoptère. Ce prépositionnement doit être opérant pour le vol en autorotation, c'est à dire lorsque le régime rotor est supérieur au régime maximal régulé. Ici aussi, pour couvrir les manoeuvres rapides et assurer l'amortissement indispensable, un terme en dNR/dt sera nécessaire pour altérer vers le haut la position de la butée.

### Fonctionnement de l'asservissement :

On rapelle que l'asservissement de la butée à la limitation est rendu actif dès qu'une des butées ou une limitation est approchée trop rapidement (couple, Ng, t4, ou NR).

### En puissance :

Le calculateur détermine la limitation de puissance à prendre en compte :

| | |
|---|---|
| Vi < 55 kt | limitation 5 minutes |
| Vi > 55 kt | limitation maximale continue |
| un moteur en panne | limitation d'urgence |

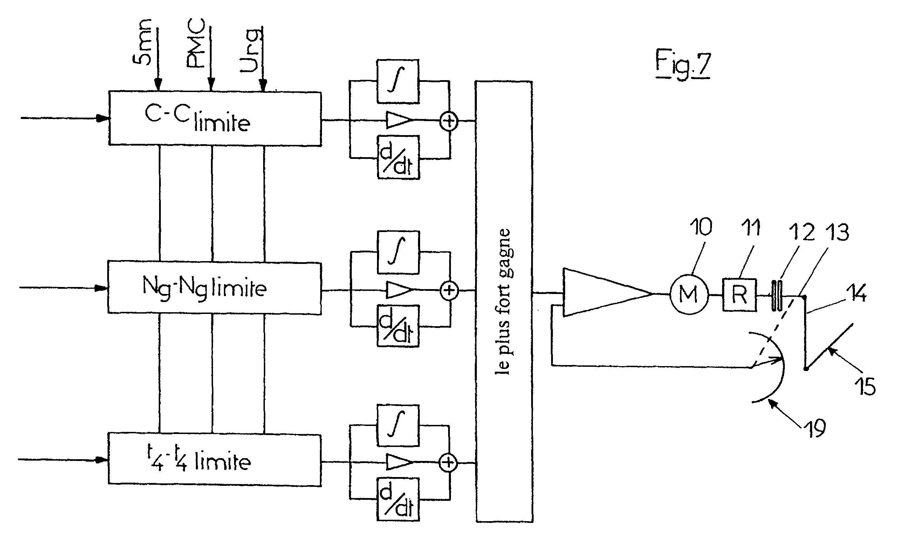

Il calcule alors les écarts entre les valeurs présentes et les limitations correspondantes (couple, Ng, t4), choisit le plus grand écart et l'envoie à l'asservissement du moteur, en y associant un terme dérivé et un terme intégré pour commander le déplacement de la butée 17A. Ainsi, la limitation prise en compte est la première atteinte et reste active tant qu'une autre ne dépasse pas sa limite et vienne la remplacer ou que le contact 17A' de la butée 17A reste fermé. Le schéma de principe de ce fonctionnement est représenté à la figure 7.

### En autorotation

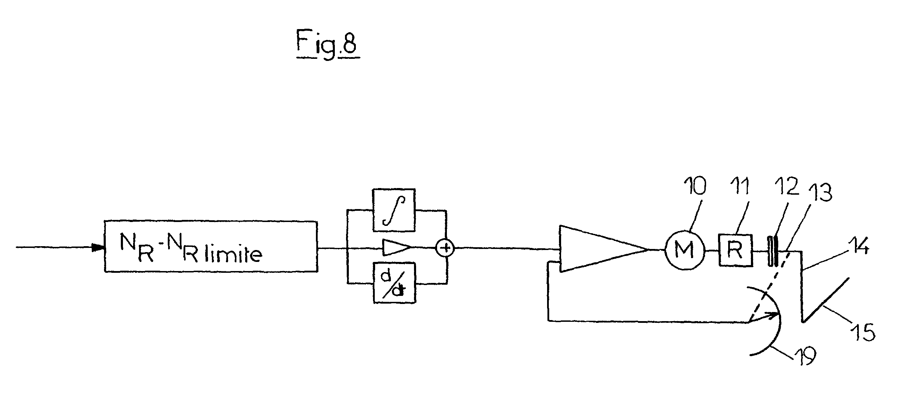

Le schéma est analogue et représenté à la figure 8.

## Revendications

1. Procédé d'aide au contrôle des limitations de puissance de la transmission du ou des turbomoteurs d'un hélicoptère, dont les commandes de vol comprennent notamment un levier de pas collectif (3) articulé de manière à agir dans le plan vertical pour augmenter ou diminuer le pas des pales selon qu'il est tiré vers le haut ou poussé vers le bas, **caractérisé en ce que** l'on utilise un calculateur (2) pour détecter l'écart entre les limitations et les paramètres de puissance correspondants, sélectionner le plus important, et commander une butée mécanique motorisée (10, 11, 17A) assurant la formation d'un point dur ou butée constituant un obstacle s'opposant à la libre poursuite du mouvement de pivotement du levier de pas collectif (3) vers le haut, dès que l'une des limitations de puissance est atteinte ou dépassée.

2. Procédé de contrôle du régime rotor d'un hélicoptère, en autorotation, dont les commandes de vol comprennent notamment un levier de pas collectif (3) articulé de manière à agir dans le plan vertical pour augmenter ou diminuer le pas des pales selon qu'il est tiré vers le haut ou poussé vers le bas, **caractérisé en ce que** l'on utilise un calculateur (2) pour détecter l'écart entre la limitation de régime rotor et le régime actuel, et pour commander une butée mécanique motorisée (10, 11, 17B) assurant la formation d'un point dur ou butée constituant un obstacle s'opposant à la libre poursuite du mouvement de pivotement dudit levier de pas collectif (3) vers le bas, dès que le régime rotor maximal de consigne donné au calculateur est atteint ou dépassé.

3. Procédé selon l'une des revendications 1 ou 2, **caractérisé en ce que** le point dur ou butée créée par la motorisation (10, 11) commandée par le calculateur (2), est surpassable.

4. Dispositif d'aide au contrôle des limitations de puissance de la transmission du ou des turbomoteurs d'un hélicoptère, dont les commandes de vol comprennent notamment un levier de pas collectif (3) articulé de manière à agir dans le plan vertical pour augmenter ou diminuer le pas des pales selon qu'il est tiré vers le haut ou poussé vers le bas, **caractérisé en ce qu'**il comprend une butée mécanique motorisée (10, 11, 17A), assurant la formation d'un point dur ou butée s'opposant à la poursuite du mouvement de pivotement du levier de pas collectif (3) vers le haut, cette butée mécanique motorisée étant commandée par un calculateur (2) programmé pour détecter l'écart entre les limitations et les paramètres de puissance correspondants, sélectionner le plus important et commander ladite butée, dès que l'une des limitations de puissance est atteinte ou dépassée.

5. Dispositif d'aide au contrôle du régime rotor d'un hélicoptère thermopropulsé, en autorotation, dont les commandes de vol comprennent notamment un levier de pas collectif (3) articulé de manière à agir dans le plan vertical pour augmenter ou diminuer le pas des pales selon qu'il est tiré vers le haut ou poussé vers le bas, **caractérisé en ce qu'**il comprend une butée mécanique motorisée (10, 11, 17B) assurant la formation d'un point dur ou butée s'opposant à la poursuite du mouvement de pivotement du levier de pas collectif (3) vers le bas, cette butée mécanique motorisée étant commandée par un calculateur (2) programmé pour détecter l'écart entre la limitation de régime rotor et le régime actuel, et pour commander ladite butée motorisée (10, 11, 17B), dès que le régime rotor maximal de consigne donné au calculateur (2) est atteint.

6. Dispositif selon l'une des revendications 4 ou 5, d'aide au contrôle des limitations de puissance du ou des turbomoteur(s) d'un hélicoptère, ou du régime rotor, en autorotation, d'un hélicoptère thermopropulsé, dont le levier de pas collectif (3) est relié à une timonerie de pas collectif (20) elle-même reliée au combinateur (4) comprenant les commandes de pas collectif (4a) et de pas cyclique (4b) de l'appareil, **caractérisé en ce que** le système de butée(s) mécanique(s) motorisée(s) comprend un moteur électrique (10) entraînant un réducteur irréversible (11) relié à la timonerie de pas collectif (20), au moyen d'une transmission (13, 14, 15; 13A, 13B, 14, 15), et **en ce que** les organes électro-mécaniques (17A-17A', 17B-17B') du système de butée(s) mécanique(s) motorisée(s) sont placés sur un élément (13A-13B, 15) de la transmission, cet élément étant constitué en deux parties (13A, 13B; 15a, 15b) assemblées avec une possibilité de mouvement relatif l'une par rapport à l'autre, l'une de ces parties (13A, 15b) étant munie de la ou des butées (17A, 17B), tandis que l'autre partie (13B, 15a) porte un butoir (16) pouvant être mis en contact avec la butée (17A ou 17B), ou avec l'une ou l'autre des butées (17A et 17B), laquelle ou lesquelles comporte(nt) un système de détection électrique (17A', 17B') de contact avec ledit butoir, la ou lesdites butée(s) étant, de préférence, ajustable(s).

7. Dispositif suivant la revendication 6, **caractérisé en ce qu'**un accouplement à friction (12) est disposé sur l'arbre de transmission (13A), entre le boîtier de réduction (11) et la ou les butées (17A, 17B).

8. Dispositif suivant l'une quelconque des revendications 4 à 7, **caractérisé en ce que** les butées (17A-17B) comprennent un système de recopie de position (19), nécessaire au fonctionnement de l'asservissement.

9. Dispositif suivant l'une quelconque des revendications 4 à 8, dont le système de butée mécanique motorisé (10, 11, 12, 13, 16, 17A, 17B), présente un arbre de sortie (13B) sur lequel est monté un levier de sortie (14), **caractérisé en ce qu'**un fusible (18) est monté sur l'attache (14a) du levier de sortie (14) dudit système de butée mécanique motorisé (10, 11,12, 13, 16, 17A, 17B), afin de prévenir tout blocage mécanique dudit système.

10. Hélicoptère thermopropulsé, **caractérisé en ce qu'**il est équipé du dispositif de contrôle de limitations de puissance, selon l'une quelconque des revendications 4 à 9.

## Patentansprüche

1. Verfahren zur Unterstützung der Kontrolle der Leistungsbegrenzungen der Kraftübertragung des oder der Turbomotoren eines Helikopters, dessen Steuerwerk insbesondere einen Kollektivhebel (3) umfaßt, der so gelenkig verbunden ist, daß er in vertikaler Ebene betätigt werden kann, um die Steigung der Rotorblätter zu erhöhen oder zu reduzieren, je nachdem, ob er nach oben gezogen oder nach unten gedrückt wird, **dadurch gekennzeichnet, daß** ein Rechner (2) verwendet wird, um die Abweichung zwischen den Begrenzungen und den entsprechenden Leistungsparametern zu ermitteln, den bedeutendsten Abweichungswert auszuwählen und einen motorisierten mechanischen Anschlag (10, 11,17A) zu steuern, wodurch die Bildung eines festen Punkts bzw. eines Anschlags sichergestellt wird, der ein Hindernis bildet, das sich der freien Fortsetzung der Kippbewegung des Kollektivhebels (3) nach oben widersetzt, sobald eine der Leistungsbegrenzungen erreicht ist oder überschritten wird.

2. Verfahren zur Kontrolle der Rotordrehzahl eines Helikopters in Autorotation, dessen Steuerwerk insbesondere einen Kollektivhebel (3) umfaßt, der so gelenkig verbunden ist, daß er in vertikaler Ebene betätigt werden kann, um die Steigung der Rotorblätter zu erhöhen oder zu reduzieren, je nachdem, ob er nach oben gezogen oder nach unten gedrückt wird, **dadurch gekennzeichnet, daß** ein Rechner (2) verwendet wird, um die Abweichung zwischen der Rotordrehzahlbegrenzung und der aktuellen Drehzahl zu ermitteln und um einen motorisierten mechanischen Anschlag (10, 11, 17B) zu steuern, wodurch die Bildung eines festen Punkts bzw. eines Anschlags sichergestellt wird, der ein Hindernis bildet, das sich der freien Fortsetzung der Kippbewegung des Kollektivhebels (3) nach unten widersetzt, sobald der an den Rechner übermittelte Einstellwert für die maximale Rotordrehzahl erreicht ist oder überschritten wird.

3. Verfahren nach einem der Ansprüche 1 oder 2, **dadurch gekennzeichnet, daß** der feste Punkt bzw. Anschlag, der durch die vom Rechner (2) gesteuerte Motorisierung (10, 11) gebildet wird, überschritten werden kann.

4. Vorrichtung zur Unterstützung der Kontrolle der Leistungsbegrenzungen der Kraftübertragung des oder der Turbomotoren eines Helikopters, dessen Steuerwerk insbesondere einen Kollektivhebel (3) umfaßt, der so gelenkig verbunden ist, daß er in vertikaler Ebene betätigt werden kann, um die Steigung der Rotorblätter zu erhöhen oder zu reduzieren, je nachdem, ob er nach oben gezogen oder nach unten gedrückt wird, **dadurch gekennzeichnet, daß** sie einen mechanischen motorisierten Anschlag (10, 11, 17A) umfaßt, der die Bildung eines festen Punkts bzw. Anschlags sicherstellt, der sich der Fortsetzung der Kippbewegung des Kollektivhebels (3) nach oben widersetzt, wobei dieser mechanische motorisierte Anschlag von einem Rechner (2) gesteuert wird, der so programmiert ist, daß er die Abweichung zwischen den Begrenzungen und den entsprechenden Leistungsparametern ermittelt, den bedeutendsten Abweichungswert auswählt und den Anschlag steuert, sobald einer der Leistungsbegrenzungswerte erreicht oder überschritten wurde.

5. Vorrichtung zur Unterstützung der Kontrolle der Rotordrehzahl eines Helikopters mit Strahlantrieb in Autorotation, dessen Steuerwerk insbesondere einen Kollektivhebel (3) umfaßt, der so gelenkig verbunden ist, daß er in vertikaler Ebene betätigt werden kann, um die Steigung der Rotorblätter zu erhöhen oder zu reduzieren, je nachdem, ob er nach oben gezogen oder nach unten gedrückt wird, **dadurch gekennzeichnet, daß** sie einen mechanischen motorisierten Anschlag (10, 11, 17B) umfaßt, der die Bildung eines festen Punkts bzw. Anschlags sicherstellt, der sich der Fortsetzung der Kippbewegung des Kollektivhebels (3) nach unten widersetzt, wobei dieser mechanische motorisierte Anschlag von einem Rechner (2) gesteuert wird, der so programmiert ist, daß die Abweichung zwischen der Rotordrehzahlbegrenzung und der aktuellen Drehzahl ermittelt und der motorisierten Anschlag (10, 11, 17B) gesteuert wird, sobald der an den Rechner (2) übermittelte Einstellwert für die maximale Rotordrehzahl erreicht ist.

6. Vorrichtung nach einem der Ansprüche 4 oder 5 zur Unterstützung der Kontrolle der Leistungsbegrenzungen des oder der Turbomotoren eines Helikopters oder der Rotordrehzahl eines Helikopters mit Strahlantrieb in Autorotation, dessen Kollektivhebel (3) mit einem Kollektivschaltgestänge (20) verbunden ist, das selbst wiederum mit dem Steuerschalter (4) verbunden ist, der die Kollektivsteuerungen (4a) und die Steigungssteuerung (4b) des Fluggeräts umfaßt, **dadurch gekennzeichnet, daß** das System aus einem oder mehreren mechanischen motorisierten Anschlägen einen Elektromotor (10) umfaßt, der ein nicht umkehrbares Untersetzungsgetriebe (11) antreibt, das mit dem Kollektivschaltgestänge (20) mittels einer Kraftübertragung (13, 14, 15; 13A, 13B, 14, 15) verbunden ist, und dadurch, daß die elektromechanischen Organe (17A-17A', 17B-17B') des Systems aus einem oder mehreren mechanischen motorisierten Anschlägen auf einem Element (13A-13B, 15) der Kraftübertragung positioniert sind, wobei dieses Element aus zwei Teilen (13A, 13B; 15a, 15b) gebildet ist, die relativ zueinander beweglich montiert sind, wobei eines der Teile (13A, 15b) mit dem oder den Anschlägen (17A, 17B) ausgestattet ist, während das andere Teil (13B, 15a) einen Anschlagpuffer (16) aufweist, der mit dem Anschlag (17A oder 17B) oder mit dem einen oder anderen der Anschläge (17A und 17B) in Kontakt gebracht werden kann, der bzw. die ein elektrisches Erfassungssystem (17A', 17B') für einen Kontakt mit dem Anschlagpuffer aufweist oder aufweisen, wobei der Anschlag bzw. die Anschläge vorzugsweise einstellbar sind.

7. Vorrichtung nach Anspruch 8, **dadurch gekennzeichnet, daß** auf der Antriebswelle (13A) eine Reibungskupplung (12) zwischen dem Gehäuse des Untersetzungsgetriebes (11) und dem oder den Anschlägen (17A, 17B) angeordnet ist.

8. Vorrichtung nach einem der Ansprüche 4 bis 7, **dadurch gekennzeichnet, daß** die Anschläge (17A-17B) ein Positionskopiersystem (19) aufweisen, das für die Funktionsweise des Regelungssystem erforderlich ist.

9. Vorrichtung nach einem der Ansprüche 4 bis 8, deren mechanisches motorisiertes Anschlagsystem (10, 11, 12, 13, 16, 17A, 17B) eine Ausgangswelle (13B) aufweist, auf dem ein Ausgangshebel (14) montiert ist, **dadurch gekennzeichnet, daß** eine Sicherung (18) auf dem Verbindungsstück (14a) des Ausgangshebels (14) des mechanischen motorisierten Anschlagsystems (10, 11, 12, 13, 16, 17A, 17B) montiert ist, um jede mechanische Blockierung des Systems zu verhindern.

10. Helikopter mit Strahlantrieb, **dadurch gekennzeichnet, daß** er mit dem Einrichtung zur Kontrolle der Leistungsbegrenzungen nach einem der Ansprüche 4 bis 9 ausgestattet ist.

## Claims

1. Method for assisting control of the power limitations of the drive of the turbo-engine(s) of a helicopter, the flight controls of which comprise in particular a collective pitch lever (3) which is articulated such as to act on the vertical plane in order to increase or decrease the pitch of the blades according to whether it is pulled upwards or pushed downwards, **characterised in that** a computer (2) is used in order to detect the difference between the limitations and the corresponding power parameters, to select the greatest, and to control a motorised mechanical stop (10, 11, 17A), thus assuring formation of a friction point or stop constituting an obstacle which opposes the free continuation of the pivoting movement of the collective pitch lever (3) upwards, as soon as one of the power limitations is reached or exceeded.

2. Method for controlling the rotor speed of a helicopter in automatic rotation, the flight controls of which comprise in particular a collective pitch lever (3) which is articulated such as to act on the vertical plane in order to increase or decrease the pitch of the blades according to whether it is pulled upwards or pushed downwards, **characterised in that** a computer (2) is used in order to detect the difference between the limitation of rotor speed and the current speed, and to control a motorised mechanical stop (10, 11, 17B) which assures formation of a friction point or stop constituting an obstacle which opposes the free continuation of the pivoting movement of the collective pitch lever (3) downwards, as soon the set maximum rotor speed imparted to the computer is reached or exceeded.

3. Method according to claim 1 or claim 2, **characterised in that** it is possible to pass beyond the friction point or stop created by the motorisation (10, 11) controlled by the computer (2).

4. Device for assisting control of the power limitations of the drive of the turbo-engine(s) of a helicopter, the flight controls of which comprise in particular a collective pitch lever (3) which is articulated such as to act on the vertical plane in order to increase or decrease the pitch of the blades according to whether it is pulled upwards or pushed downwards, **characterised in that** it comprises a motorised mechanical stop (10, 11, 17A) which assures formation of a friction point or stop which opposes the continuation of the pivoting movement of the collective pitch lever (3) upwards, this motorised mechanical stop being controlled by a computer (2) which is programmed to detect the difference between the limitations and the corresponding power parameters, to select the greatest, and to control the said stop, as soon as one of the power limitations is reached or exceeded.

5. Device for assisting control of the rotor speed of a thermally propelled helicopter in automatic rotation, the flight controls of which comprise in particular a collective pitch lever (3) which is articulated such as to act on the vertical plane in order to increase or decrease the pitch of the blades according to whether it is pulled upwards or pushed downwards, **characterised in that** it comprises a motorised mechanical stop (10, 11, 17B) which assures formation of a friction point or stop which opposes the continuation of the pivoting movement of the collective pitch lever (3) downwards, this motorised mechanical stop being controlled by a computer (2) which is programmed to detect the difference between the limitation of rotor speed and the current speed, and to control the said motorised stop (10, 11, 17B) as soon the set maximum rotor speed imparted to the computer (2) is reached.

6. Device according to claim 4 or claim 5 for assisting control of the power limitations of the drive of the turbo-engine(s) of a helicopter, or of the rotor speed in automatic rotation of a thermally propelled helicopter, the collective pitch lever (3) of which is connected to a collective pitch gear (20), which itself is connected to the control switch (4) comprising the collective switch (4a) and cyclical pitch (4b) controls for the device, **characterised in that** the system of motorised mechanical stop(s) comprises an electric motor (10) which drives a non-reversible reduction gear (11) which is connected to the collective pitch gear (20) by means of a drive (13, 14, 15; 13A, 13B, 14, 15) and **in that** the electro-mechanical units (17A-17A', 17B-17B') of the system of motorised mechanical stop(s) are placed on an element (13A-13B, 15) of the drive, this element consisting of two parts (13A, 13B; 15a, 15b) which are assembled with the possibility of movement relative to one another, one of these parts (13A, 15b) being provided with the stop(s) (17A, 17B), whereas the other part (13B, 15a) supports a stop (16) which can be put into contact with the stop (17A or 17B), or with either of the stops (17A and 17B), which comprise an electrical detection system (17A', 17B') for contact with the said stop, the said stop(s) preferably being adjustable.

7. Device according to claim 6, **characterised in that** a friction coupling (12) is disposed on the drive shaft (13A), between the reduction gear case (11) and the stop(s) (17A, 17B).

8. Device according to any one of claims 4 to 7, **characterised in that** the stops (17A-17B) comprise a position reproduction system (19) which is necessary for the functioning of the automatic control.

9. Device according to any one of claims 4 to 8, the motorised mechanical stop system (10, 11, 12, 13, 16, 17A, 17B) of which has an output shaft (13B) on which there is fitted an output lever (14), **characterised in that** a fuse (18) is fitted on the connection (14a) of the output lever (14) of the said motorised mechanical stop system (10, 11, 12, 13, 16, 17A, 17B), in order to prevent any mechanical blockage of the said system.

10. Thermally propelled helicopter, **characterised in that** it is equipped with the device for controlling limitations of power, according to any one of claims 4 to 9.
